# EUROPEAN PATENT APPLICATION

(11) **EP 3 034 876 A1**
(43) Date of publication of application: **22.06.2016**
(21) Application number: 15201260.5
(22) Date of filing: 18.12.2015
(51) Int. Cl.: F04B 35/06, F04B 39/00, F04B 39/12, F04B 41/02

(54) **PRESSURE-SETTING REGULATOR**

(30) Priority: 18.12.2014 US 201462093702 P; 13.12.2015 US 201514967319
(71) Applicant: Black & Decker Inc., New Britain, CT 06053 (US)
(72) Inventor: White, Gary D., Medina, Tennessee 38355 (US); Wilson, Christina, Jackson, Tennessee 38301 (US)
(74) Representative: Bell, Ian Stephen

(57) **Abstract**

An air compressor having a pressure-setting regulator for setting a regulator outlet pressure without a separate pressure gauge. A pressure controlling regulator knob can be rotated to set and control the regulator outlet pressure selected from a scale of set outlet pressures. The pressure control system can utilize a single-turn pressure control knob which can be used to select any pressure from a range of outlet pressures which can be produced by the regulator a partial or full rotation of the regulator knob. A compressor can use the positive control pressure regulation system, be free of an outlet pressure gauge, and allow a user to select an outlet pressure from a range of outlet pressures by rotating the single-turn regulator knob to select a set outlet pressure from the scale of set outlet pressures.

## Description

The invention relates to a pressure regulator.

Manually setting the outlet pressure of a pressure regulator is an inefficient, clumsy and empirical process that requires a feedback system in which an operator visually monitors an outlet pressure gauge and adjusts and tweaks the regulator pressure drop until a final outlet pressure is eventually achieved. This approach is time consuming, inaccurate, and allows for an operator to overshoot or undershoot a desired outlet pressure during the process. Such error can cause operational difficulties, as well as preventing operation at the outlet pressure desired. A strong need exists for a new control system for manually setting the outlet pressure of pressure regulators.

An embodiment of the present invention is directed to an air compressor that eliminates the regulator pressure gauge and allows the regulator to manually be set to a predetermined pressure.

In an embodiment, a pressure regulator can have a scale indicating a number of outlet pressures which can be set as a selected outlet pressure of a gas exiting the pressure regulator. A regulator knob can be adapted to be rotated manually to a selected outlet pressure chosen from the number of outlet pressures. A regulator spring can be used that at least in part controls a valve that regulates a flow of the gas. The regulator knob can be adapted to change a spring compression of the regulator spring when the regulator knob is manually rotated to set the selected outlet pressure of the gas.

In an embodiment, rotation of the regulator knob to the selected outlet pressure, as well as setting a selected outlet pressure, can be free of a feedback control mechanism. The selected outlet pressure can be set by the regulator knob to a value selected on the scale and the pressure regulator can be configured to produce an outlet pressure free of reference to an outlet pressure gauge.

The scale can be of a variety of configurations. For example, the scale can be configured to be generally coaxial with the circumference of the regulator knob. In an embodiment, the scale can be configured to be generally coaxial with the circumference of the regulator knob and can indicate a plurality of outlet pressures which can be selected and which have one or more of the plurality of outlet pressures in a range of from 25 psig to 250 psig, or higher.

The regulator knob can also have of a variety of designs. In one embodiment, the regulator knob can have single-turn coarse grooves which slideably engage single-turn coarse threads which project from a portion of a regulator body, such as a control cylinder. Optionally, the regulator knob can have an indicium which can be aligned with a portion of the scale to set the selected outlet pressure. In an embodiment, the indicium can be an arrow, such as a set point arrow, which can be pointed to a pressure indicated by the scale to set a selected outlet pressure.

The rotation of the regulator knob and the indication of its position can have a variety of mechanisms, in an embodiment the regulator knob can be ratcheted when rotated to cause an alignment of a portion of the regulator knob to a portion of the scale to set the selected outlet pressure.

In an embodiment, a pressure control system can have the pressure regulator which can have a regulator knob which can be rotated to control an outlet pressure of a gas exiting the pressure regulator. The pressure control system can also have the scale configured proximate to the regulator knob and indicating a plurality of outlet pressure values one of which can be selected as an outlet set pressure; an indicium mounted on and moved by the regulator knob, the indicium proximate to an outlet pressure value that is selected as an outlet set pressure. In an embodiment, the outlet set pressure can be selected by rotating the regulator knob to control the outlet pressure of the gas exiting the regulator at a desired outlet set pressure.

In an embodiment, the pressure control system can have a control cylinder can have a single-turn course thread projecting from a portion of a regulator body. The single-turn course thread can be configured to slideably engage the regulator knob. The pressure control system can use a regulator knob which is a single-turn regulator knob.

The pressure control system can control the outlet pressure to within 15 percent, or 10 percent, or closer, of an outlet set pressure when the regulator knob remains in a fixed position corresponding to a selected outlet pressure. In an embodiment, the pressure control system can be configured to indicate an outlet pressure midpoint when the regulator knob is rotated to a point that is located at about one-half of its rotational range.

A compressor can have the pressure-setting regulator and/or the pressure control system which uses the pressure-setting regulator. In an embodiment, a compressor for producing a compressed gas can have the pressure regulator, a scale indicating a plurality of outlet pressures which can be set as a selected outlet pressure of a gas exiting the regulator and a regulator knob adapted to be manually rotated to set the selected outlet pressure from the plurality of outlet pressures of the scale. A regulator spring can at least in part control a valve that regulates a flow of the gas of the pressure-setting regulator. The regulator knob can be adapted to change a spring compression of the regulator spring when the regulator knob is manually rotated to set the selected outlet pressure of the gas. In an embodiment, the scale can be configured proximate to the regulator knob.

In an embodiment, a positive control method of pressure regulation can use the pressure-setting regulator. A method of controlling the regulator outlet pressure can have the steps of: providing a regulator having a single-turn regulator knob which has an indicium adapted to indicated a portion of the scale; providing the scale configured proximate to the single-turn regulator knob and having a plurality of outlet pressures; rotating the single-turn regulator knob such that the indicium indicates an outlet pressure which is an outlet pressure set point; and in which the rotating of the single-turn regulator knob changes the pressure exerted by a regulator spring which changes the differential pressure of the regulator to change the outlet pressure. In an embodiment, the method of controlling regulator outlet pressure can control the controlling the outlet pressure within 20 percent of the outlet pressure set point.

In an embodiment, the pressure-setting regulator can be set to an outlet pressure by rotating the regulator knob such that the indicium, such as the set point arrow, is proximate to a selected outlet pressure. In an embodiment, the regulator knob can be calibrated to position the indicium, such as an arrow or other mark, such that it is configured at the mid-range of the single-turn regulator knob rotational range. In another embodiment, the pressure-setting regulator can be calibrated to achieve a minimum variance in the outlet pressure when the indicium is at a position within 45 degrees of the rotational mid-point of the regulator knob.

The present invention in its several aspects and embodiments solves the problems discussed above and significantly advances the technology of pressure regulators. The present invention can become more fully understood from the detailed description and the accompanying drawings, wherein:
FIG. 1 shows an existing air compressor employing a feedback control system having a regulator and an outlet pressure gauge;
FIG. 2 shows a perspective view of a compressor assembly having a pressure-setting regulator;
FIG. 3 shows a perspective view of the mechanical design of the compressor assembly having the pressure-setting regulator without the housing;
FIG. 4 shows a pump-side view of the mechanical design of the compressor assembly having the pressure-setting regulator without the housing;
FIG. 5A shows a control cylinder with a fine pitch thread;
FIG. 5B shows the control cylinder with a coarse pitch thread;
FIG. 6A shows a regulator knob with grooves corresponding to the fine pitch thread;
FIG. 6B shows the regulator knob with grooves corresponding to the coarse pitch thread;
FIG. 7 shows a sectional view of the pressure-setting regulator;
FIG. 8 shows a dashboard having an inlet pressure gauge and the pressure-setting regulator with an example scale of outlet set pressure options;
FIG. 9 shows a dashboard having an inlet pressure gauge and a multi-turn configuration of the pressure-setting regulator;
FIG. 10A shows the knob bearing an indicium at a first position;
FIG. 10B shows the knob bearing an indicium being rotated to a second position;
FIG. 10C shows the knob bearing an indicium at a third position;
FIG. 10D shows the knob bearing an indicium being rotated to a fourth position;
FIG. 11A shows a sectional view of the pressure-setting regulator in a closed configuration;
FIG. 11B shows a sectional view of the pressure-setting regulator having the knob rotatable to increase and decrease the pressure of an outlet gas stream; and
FIG. 11C shows a sectional view of the pressure-setting regulator having the knob rotated to a set outlet pressure and regulating the flow of an outlet gas stream.

Herein, like reference numbers in one figure refer to like reference numbers in another figure.

The invention relates to the many and varied embodiments of a positive control regulator, pressure regulation system and to methods for regulating outlet gas pressure from a compressor. The pressure regulation system can be used with a compressor assembly which can compress air, or a gas, or gas mixtures. The compressor can compress one or more gases, inert gases, or mixed gas compositions.

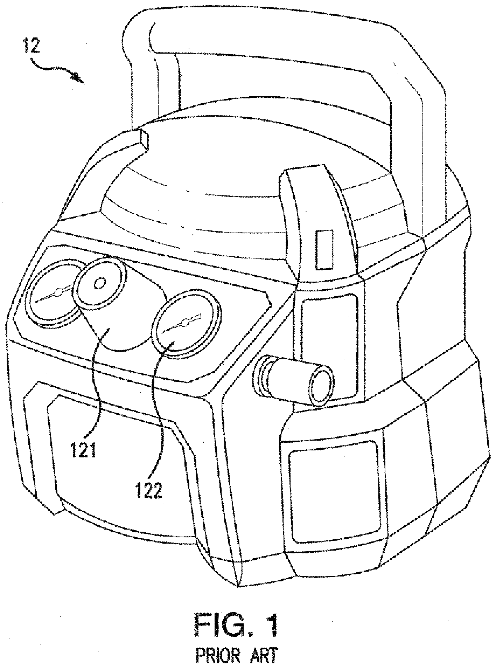

FIG. 1 shows an existing air compressor employing a feedback control system having a regulator and an outlet pressure gauge. As shown in Figure 1, existing air compressors have a manifold including a regulator for increasing or decreasing the pressure output to a connected power tool. The regulator can be in the form of an old-style regulator knob **121** that is connected to a pressure regulator valve that opens and closes to admit and obstruct, respectively, the flow of pressurized air into the power tool. The regulator is connected to a regulator outlet pressure gauge **122** that measures the regulator pressure and provides an indication of the measurement in a form such as a dial that can be read by the user. When the regulator knob is turned, there is a delay between setting the regulator pressure and the pressure gauge readout until the pressure in the system catches up to the regulator pressure or decreases to the regulator pressure selected by the user. In addition, it is necessary for the user to perform incremental regulator knob rotations, clockwise and counterclockwise, in order to adjust the regulator until the regulator outlet pressure gauge **122** reads the desired pressure.

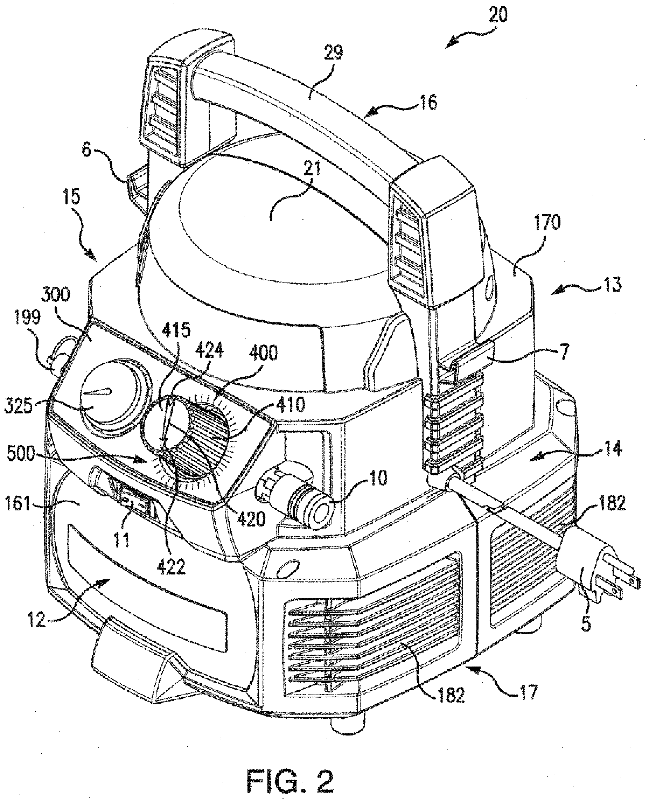

FIG. 2 shows a perspective view of a compressor assembly **20.** In an embodiment, the compressor assembly **20** can compress air, or can compress one or more gases, or gas mixtures. The compressor assembly **20** can be portable and can have a handle **29,** which optionally can be a portion of compressor body **13.**

The definition of "air" herein is intended to be very broad. The term "air" includes breathable air, ambient air, treated air, conditioned air, clean room air, cooled air, heated air, non-flammable oxygen containing gas, filtered air, purified air, contaminated air, air with particulates solids or water, air from bone dry (*i.e.* 0.00 humidity) air to air which is supersaturated with water, as well as any other type of air present in an environment in which a gas (*e.g.* air) compressor can be used. It is intended that cooling gases which are not air are encompassed by this disclosure. For non-limiting example, a cooling gas can be nitrogen, can comprise a gas mixture, can comprise nitrogen, can comprise oxygen (in a safe concentration), can comprise carbon dioxide, can comprise one inert gas or a plurality of inert gases, or comprise a mixture of gases.

In an example embodiment, the compressor assembly **20** can have a pressure-setting regulator **400** configured at least in part within a housing **21.** The compressor assembly includes a tank pressure gauge **325,** a regulator knob **410** and a tool connect member **10** located on a face of the housing **21.** An ON/OFF switch **11** can be located on a front portion of the housing **21.** The regulator knob **410** is the control which controls the pressure-setting regulator **400** that is set within a desired air outlet pressure guide. The regulator knob **410** that is rotatable to a position that corresponds to the desired air output pressure to the tool. The desired air outlet pressure guide, which can be a scale **500,** is located on a dashboard **300** on the face of the housing **21** to be readable by an operator. The outlet pressure guide can optionally be in the form of a label. Alternatively, the outlet pressure guide can be integrally molded with the manifold, or etched thereon. Thereby, the regulator outlet pressure gauge **122** of the prior art shown in FIG. 1 is no longer needed. As a result of the embodiments of the present invention, users can rotate the regulator knob to set the desired outlet pressure, and not have to wait for a pressure gauge to catch up to the regulator set pressure and/or perform back and forth adjustments.

As shown, for example in FIGS 2, 8, 9 and 10A-D, the scale **500** can be configured to be generally coaxial with the circumference of the regulator knob **410.** Such a generally coaxial configuration can allow an indicium of the regulator knob **410,** such as set point arrow **420,** to be aligned with, or positioned proximate to, a value of outlet pressure on the scale **500.** In this embodiment, the regulator knob **410** that has an indicium, such as set point arrow **420,** can be turned to align with or point to a desired outlet pressure **550** which by such alignment positively sets that an outlet pressure **550** which is desired, and positively controls and maintains the desired outlet pressure.

FIG. 2 illustrates an example embodiment of the air compressor in which the tool connect member **10** is located on the intake fan side **14** of the housing **21.**

In an embodiment, the compressor assembly **20** can have a weight between 15 lbs and 100 lbs. In an embodiment, a portable embodiment of the compressor assembly **20** can have of weight between 10 lbs and 50 lbs, such as 10 lbs to 30 lbs, or 15 lbs to 40 lbs.

In an embodiment, the housing **21** can have a front housing **161** and a rear housing **170** and a plurality of intake ports **182.** The compressor assembly can be cooled by air flow provided by a fan **200** the plurality of intake ports **182.**

Power can be supplied to a motor **33** of the compressor assembly through a power cord **5** extending through the housing **21.** In an embodiment, the compressor assembly **20** can comprise one or more of a cord holder member, such as a first cord wrap **6** and a second cord wrap **7.**

In an embodiment, the power switch **11** can be used to change the operating state of the compressor assembly **20** at least from an "on" to an "off" state, and *vice versa.* In the "on" state, the compressor can be in a compressing state (also herein as a "pumping state") in which it is compressing air, or a gas, or a plurality of gases, or a gas mixture.

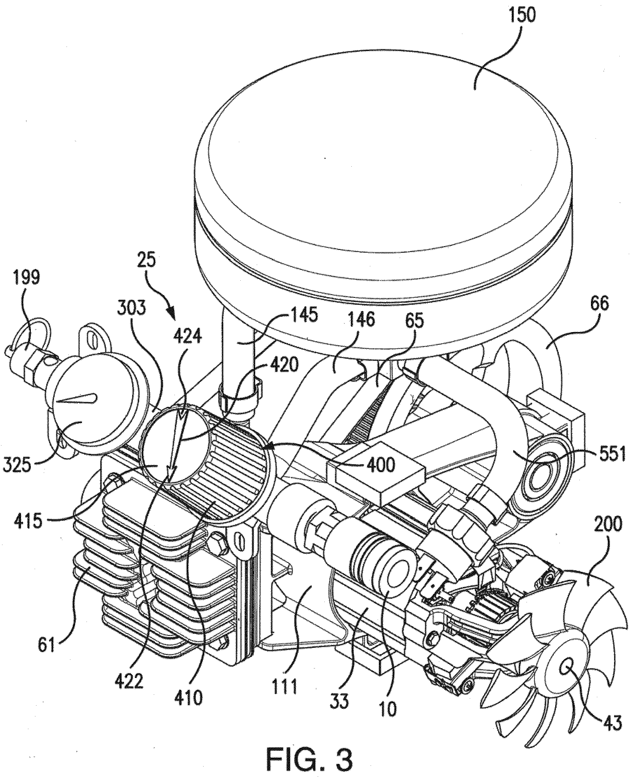

In an embodiment, other operating modes can be engaged by the power switch **11** or a compressor control system, *e.g.* a standby mode, or a power save mode. In an embodiment, the dashboard **300** can provide an operator-accessible location for connections, gauges and valves which can be connected to a manifold **303** (FIG. 3). In an embodiment, the dashboard **300** can provide an operator access in a non-limiting example to the tool connect member **10,** the pressure-setting regulator **400** and the tank pressure gauge **325.** In an embodiment, a compressed gas outlet line, hose or other device to receive compressed gas can be connected the tool connect member **10.**

A plurality of intake ports **182** can be formed in the housing **21** proximate to the fan **200** and a plurality of exhaust ports **31** (not shown) can be formed in the housing **21** proximate to the pump. The total cross-sectional open area of the intake ports **182.** In an embodiment, the cooling gas employed to cool the compressor assembly **20** and its components can be air, which optionally can be taken in from the environment in which the compressor assembly **20** is placed. The cooling gas can be exhausted from the compressor assembly **20** through a plurality of exhaust ports (not shown).

FIG. 3 illustrates the compressor assembly **20** with a portion of the housing **21** removed and showing the internal components of the compressor assembly. The pump assembly **25** compresses a gas, air or gas mixture. In an embodiment, the pump assembly **25** can be powered by the motor **33** (*e.g.* FIG. 3). The manifold **303** is shown having the pressure-setting regulator **400** and being free of an outlet pressure gauge.

Numeric values and ranges herein, unless otherwise stated, also are intended to have associated with them a tolerance and to account for variances of design and manufacturing, and/or operational and performance fluctuations. Thus, a number disclosed herein is intended to disclose values "about" that number. For example, a value X is also intended to be understood as "about X". Likewise, a range of Y-Z, is also intended to be understood as within a range of from "about Y-about Z". Unless otherwise stated, significant digits disclosed for a number are not intended to make the number an exact limiting value. Variance and tolerance, as well as operational or performance fluctuations, are an expected aspect of mechanical design and the numbers disclosed herein are intended to be construed to allow for such factors (in non-limiting *e.g.,* ± 10 percent of a given value). This disclosure is to be broadly construed. Likewise, the claims are to be broadly construed in their recitations of numbers and ranges.

The compressed gas tank **150** can operate at a pressure in a range of at least from ambient pressure, *e.g.* 14.7 psig to 3000 psig ("psig" is the unit lbf/in^2 gauge), or greater. In an embodiment, the compressed gas tank **150** can operate at 200 psig. In an embodiment, the compressed gas tank **150** can operate at 150 psig.

In an embodiment, the pressure-setting regulator **400** can use a pressure regulating valve. In an embodiment, excess air pressure can be vented to atmosphere through a pressure relief valve **199,** such as a spring loaded safety valve. In an embodiment, the pump assembly **25** and the compressed gas tank **150** can be connected to a frame **111** (FIG. 3).

In an embodiment, the compressor has a pressure regulated on/off switch which can stop the pump assembly **25** when a specified compressed gas tank pressure is obtained. Activation of the pump assembly **25** can occur at a pressure in a wide range of set operating pressure, *e.g.* 25 percent to 99.5 percent of specified compressed gas tank operating pressure. The specified compressed gas tank operating pressure can be in a range from 25 psig to 3000 psig. In an embodiment, the specified compressed gas tank **150** pressure can be 50 psig, 75 psig, 100 psig, 150 psig, 200 psig, 250 psig, 300 psig, 500 psig, 1000 psig, 2000 psig, 3000 psig, or greater than or less than, or a value in between these example numbers.

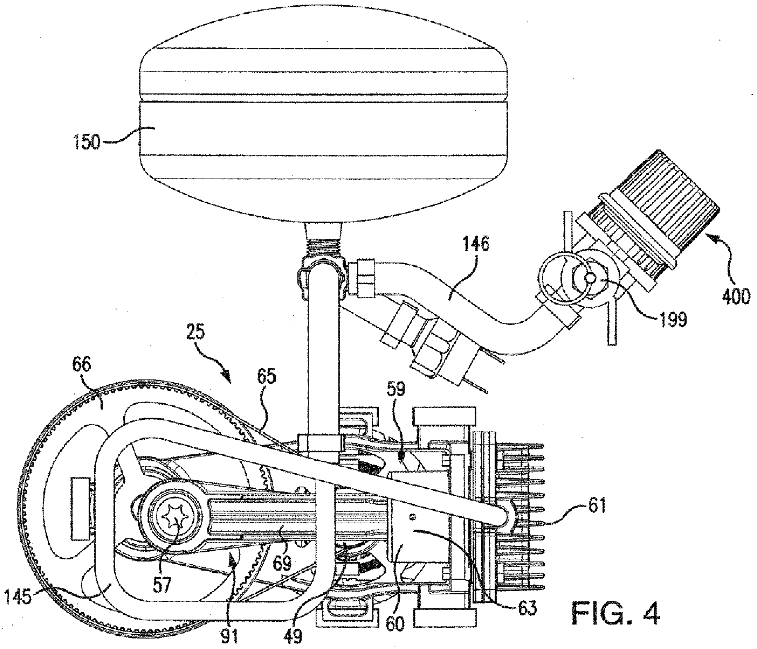

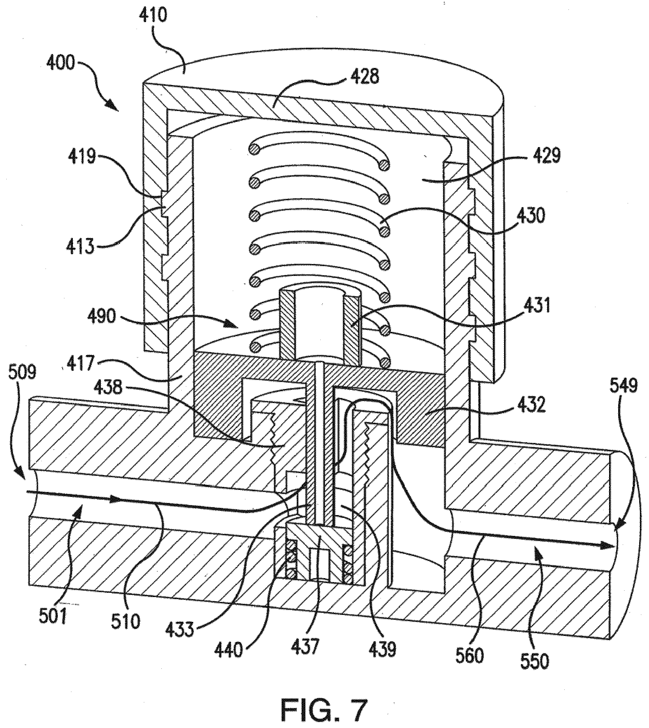

FIG. 4 shows a pump-side view of components of the pump assembly **25.** FIG. 4 shows the mechanical design of the compressor assembly **20** having the pressure-setting regulator without the housing **21.** In an embodiment, a feed air for compression can be fed to the cylinder head **61** of the pump assembly **25.** The feed air can be compressed in a pump cylinder **60** by a piston **63** to produce a compressed gas stream **510** (FIG. 7) from the cylinder head **61** and can pass through a compressed gas outlet line **145** to enter the compressed gas tank **150.**

Depending upon the compressed gas output specifications, such as output flow ranges and outlet pressure ranges, of the compressor assembly **20,** the motor **33** can operate at a motor speed between 1,000 rpm and 30,000 rpm. In an embodiment, the motor **33** can operate at a speed in a range of between 7,500 rpm and 12,000 rpm. In further embodiments, the motor **33** can operate at *e.g.* 11,252 rpm, or 11,000 rpm; or 10,000 rpm; or 9,000 rpm; or 7,500 rpm; or 6,000 rpm; or 5,000 rpm.

In an embodiment, the motor can be a non-synchronous universal motor rated, for example, at 1/2 horsepower, at 3/4 horsepower, at 1 horsepower, at 2 horsepower, at 5 horseposer or greater. In an embodiment, the motor can be a synchronous motor. The compressor assembly **20** can accommodate a variety of types of motor **33.** The pressure-setting regulator **400** can be used in large-scale industrial equipment and compressors, as well as in portable equipment and compressors.

The pump assembly **25** can have the components which are attached to the motor and/or which serve to compress a gas; which in a non-limiting example can comprise the fan **200,** the motor **33,** and a pump **59,** with a pump arm **91.**

The pump assembly **25** can have the pump **59,** such as a "gas pump" or an "air pump" that includes a piston **63,** a pump cylinder **60,** in which a piston **63** reciprocates and a connecting rod **69.** The pump further includes a pulley **66,** a drive belt **65** and driving mechanism driven by motor **33.** The connecting rod **69** can connect to the piston **63** which can move inside of the pump cylinder **60.** The motor can be a high speed universal motor, or other type of motor. The piston **63** can compress a gas in the pump cylinder **60** pumping the compressed gas through the valve plate assembly **62** into the cylinder head **61** and then out through a compressed gas outlet port **782** through an outlet line **145** and into the compressed gas tank **150.**

The pulley **66** and a sprocket **49,** can in part drive the drive belt **65,** and can be sized to achieve reduced pump speeds, which can correspond to reciprocation rates and/or a piston speed at which the piston **63** is reciprocated.

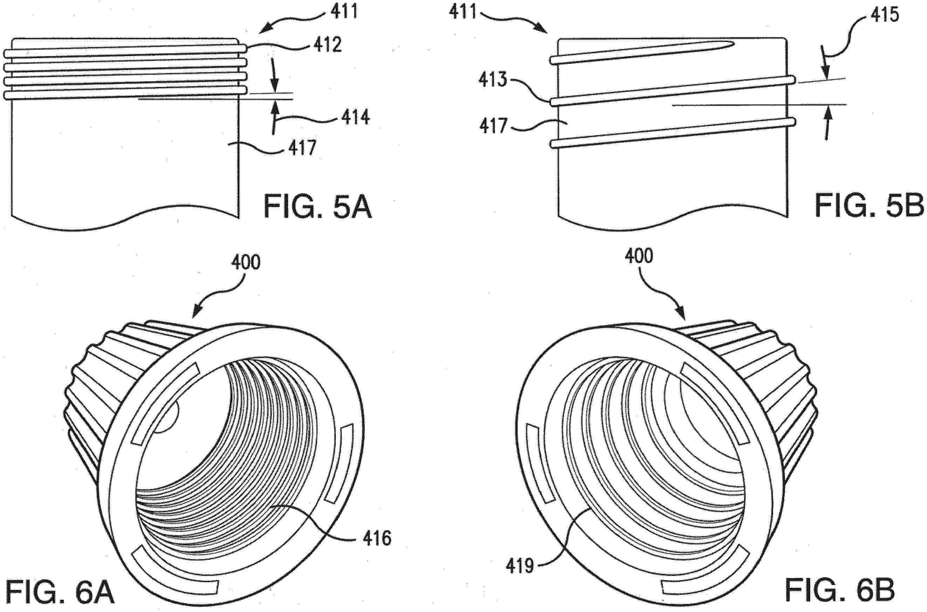

In an embodiment shown in FIG. 5A, a control cylinder **417** of the pressure-setting regulator **400** can have a fine pitch thread **412** and a fine pitch thread angle **414.** The fine pitch thread angle **414** can be less than 1.5 degrees, such as 1.17 degrees. In an embodiment, the control cylinder **417** can have greater than 10 threads per inch of the fine pitch thread **412,** such as 13 threads per inch. The regulator knob **410** can be a single-turn knob or a multi-turn knob.

FIG. 5B shows the control cylinder with a coarse pitch thread. In an embodiment, the single-turn embodiment, shown in FIG. 5B the control cylinder **417** can have a coarse pitch thread **413** which can have a coarse pitch thread angle **415.** The coarse pitch thread angle **415** can be greater than 1.5 degrees, such as 3.79 degrees. In an embodiment, the control cylinder **417** can have fewer than 10 threads per inch of the coarse pitch thread **413,** such as 4 threads per inch.

The pitch thread angle, whether the fine pitch thread angle **414,** or the coarse pitch thread angle **415** can achieve a desired angle of rotation in which the knob is rotated to achieve a set outlet pressure **550,** or to achieve any number of turns or partial turns of a knob to achieve a set outlet pressure **550.**

FIG. 6A shows a first example of a regulator knob **410** which has a fine pitch thread grooves **416** corresponding to the fine pitch thread which can engage the fine pitch thread **412** of FIG. 5A. The fine pitch thread groove **416** can have a groove angle and a number of turns to correspond to the fine pitch thread **412** to which it is engaged.

FIG. 6B shows a second example of a regulator knob **410** which has a coarse pitch thread grooves **419** corresponding to the coarse pitch thread which can engage the coarse pitch thread **415** of FIG. 5B. The coarse pitch thread groove **419** can have a groove angle and a number of turns to correspond to the coarse pitch thread **415** to which it is engaged.

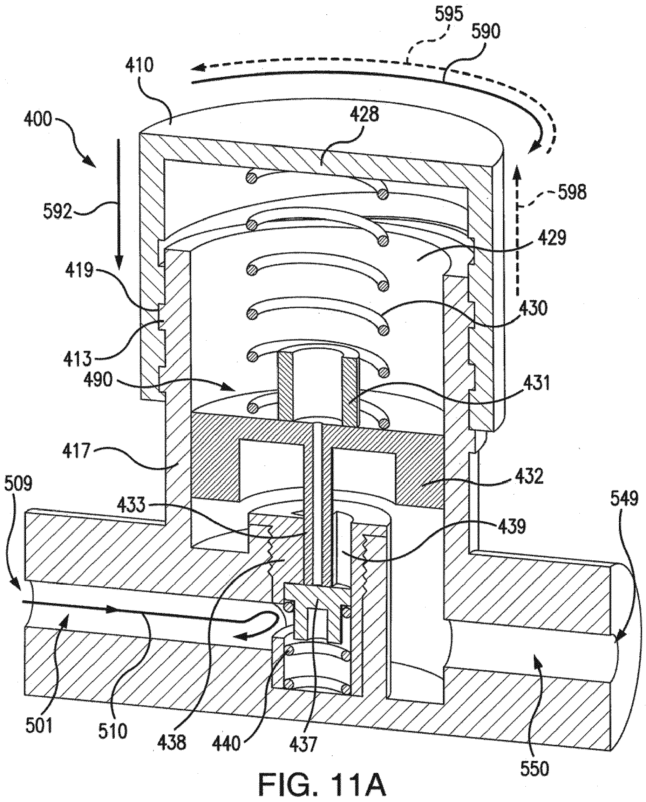

FIG. 7 shows a sectional view of the pressure-setting regulator **400.** As shown in FIG. 7, the combined regulator includes a piston **432** that is slideably disposed within the control cylinder **417.** The piston **432** moves relative to the control cylinder **417,** such as in an up and down motion, when the user rotates the regulator knob **410.** For example, the piston **432** can move downward when the user rotates the regulator knob **410** in a clockwise direction to compress the regulator spring **430** thereby increasing the outlet pressure **550** (FIG. 11A). Conversely, the piston moves up when the user rotates the knob in a counterclockwise direction to release the regulator spring **430,** raise the piston and reduce the outlet pressure **550.**

FIG. 7 shows as an example, the regulator knob **410** having the coarse pitch thread groove **419** rotatably engaged with the coarse pitch threads **413** of the control cylinder **417.** A regulator spring **430** can be housed in a spring chamber **429** and can extend between a portion of the knob driver top **428** and a portion of the piston **432.** In an embodiment, the regulator spring **430** is held in position at least in part by a spring boss **431.**

The regulator spring **430** imparts pressure from the regulator knob **410** to the piston **432.** In the example embodiment of FIG. 7, the piston **432** has a valve stem **433** which can project though a valve channel **439.** The valve stem **433** can exert pressure on a valve poppet **437** which can be engaged with a valve spring **440.**

The pressure-setting regulator **400** regulates the flow of a compressed gas and creates a pressure drop between the compressed gas pressure in the compressed gas tank **150** and/or the manifold **303** and/or the regulator inlet **509,** such as inlet pressure **501,** and a regulator outlet **549** having the outlet pressure **550.** FIG. 7 shows an embodiment in which a compressed gas stream **510** enters a regulator inlet **509** at an inlet pressure **501.** The compressed gas stream **510** at an inlet pressure **501** can be blocked by the valve mechanism when it is closed, as shown in FIGS 11A-11C, or can flow through the valve channel **439** to become an outlet gas stream **560** having an outlet pressure **550** and which exits the pressure-setting regulator **400** through regulator outlet **549.**

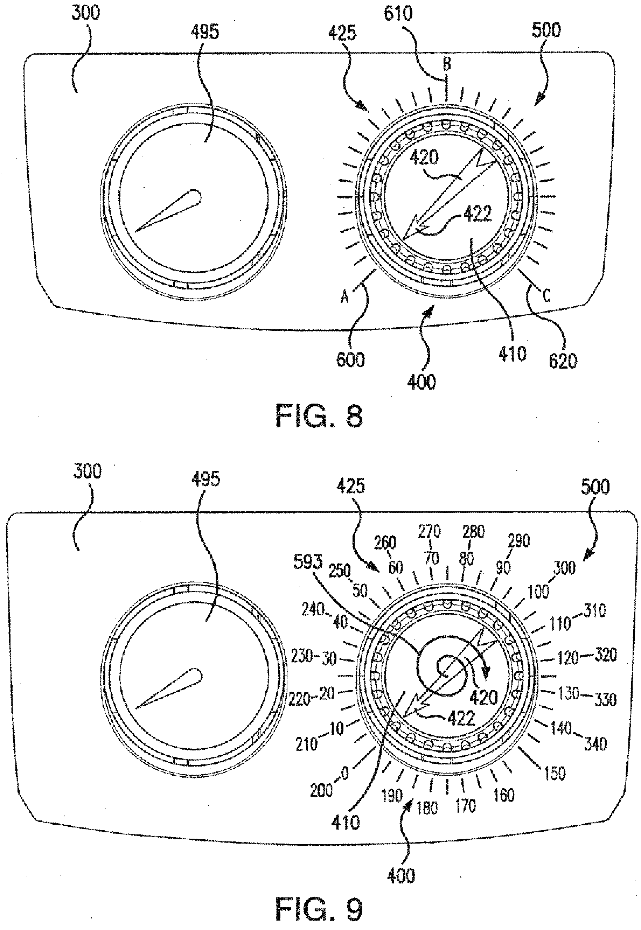

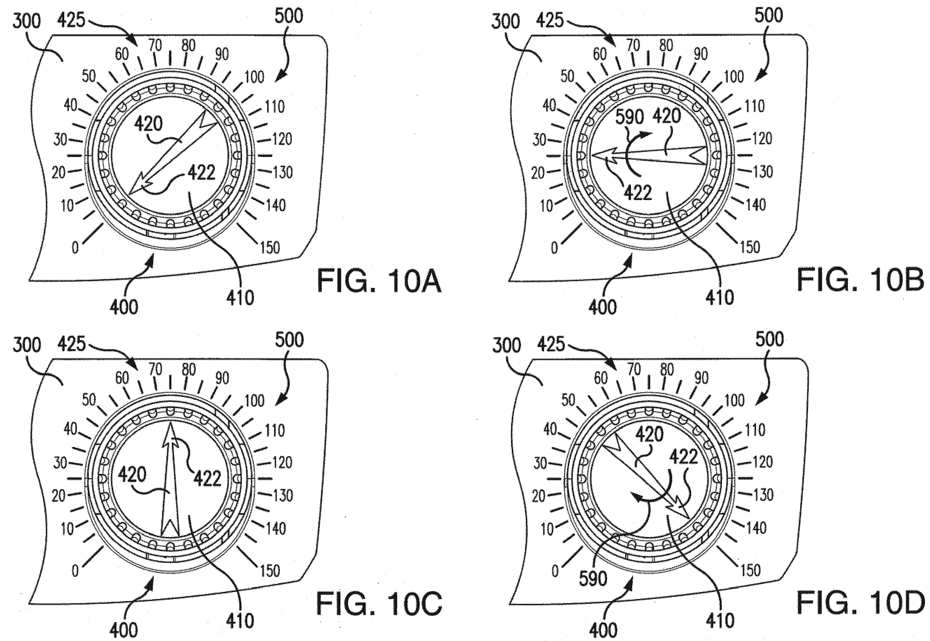

FIG. 8 shows a dashboard **300** having an inlet pressure gauge **495** and the pressure-setting regulator with an example scale of outlet set pressure options. In this example, the letter "A" represents a low set outlet pressure **600,** or zero set outlet pressure, point on the scale. The letter "B" represents a midpoint outlet pressure **610.** The letter "C" represents a high outlet pressure **620.** The low set outlet pressure **600,** the midpoint outlet pressure **610** and the high outlet pressure **620** can be set to accommodate a desired pressure range, such as 0 psig to 150 psig (FIG. 10A), or 0 psig to 250 psig, or 0 psig to 300 psig, or 0 psig to 500 psig, or other range.

FIG. 8 also shows the inlet pressure gauge **495** which measures the inlet pressure **501** to the pressure-setting regulator **400.**

Optionally, the scale **500** can be set for a single-turn configuration in which a single, or partial, rotation of the regulator knob **410** can be applied to allow a user to select any outlet pressure on the scale **500.**

The thread angle and/or number of threads per inch can be set to accommodate a desired range of pressures to achieve a single-turn functionality for a desired range of pressures and/or scale **500.**

FIG. 9 shows a dashboard **300** having an inlet pressure gauge **495** and a multi-turn configuration of the pressure-setting regulator **400.** In a multi-turn configuration, the scale **500** can optionally be configured at different levels concentrically around the regulator knob **410.** In a non-limiting example, the scale **500** has two levels concentrically arranged around the regulator knob **410** with the first indicating set outlet pressure values from 0 to 190 psig and the second level indicating set outlet pressure values from 200 psig to 350 psig. As shown by multi-turn increasing flow arrow **593,** the regulator knob **410** can be turned greater than 360 degrees, such as 720 degrees to positively control the outlet pressure **550** to the set point value **425** chosen selected by positioning the arrowhead **422** or set point arrow **420** proximate to a selected set point value **425.**

In single-turn and multi-turn applications, the regulator knob **410** can be reversibly turned, for example in one direction to increase gas flow and in the reverse direction to decrease gas flow.

FIG. 10A shows the regulator knob **410** bearing an indicium at a first position. The nonlimiting example of FIG. 10A is a single-turn embodiment in which an operator can reversibly rotate the regulator knob **410** to set a desired outlet pressure **550** by aligning the arrowhead **422** of the set point arrow to a set point pressure in the range of the scale **500.**

The dashboard **300** of the example of FIG. 10A shows the pressure-setting regulator **400** with a numeric scale of outlet set pressures. Optionally, the scale **500** of the set point values **425** of the outlet pressure is shown on the dashboard **300** and configured concentrically around at least a portion of the regulator knob **410.** As shown in FIG. 8 and the series of FIGS 10A-10D, the regulator knob **410** can be rotated to select the set point value **425** of outlet pressure **550** by aligning the arrowhead **422** proximate to the set point value **425** selected by an operator at the outlet pressure **550** desired.

In the embodiment of FIG. 10A, the regulator knob **410** is a single-turn knob which can be smoothly rotated to select any value whether marked on the scale or between markings between a minimum outlet pressure value and a maximum outlet pressure value, which for example can between 0 psig to 150 psig, or other range as desired.

In FIG. 10A, the pressure-setting regulator **400** is in a "no flow" position in which the set point value is zero, the outlet gas stream **560** is zero, and the outlet pressure **550** not affected by the inlet pressure **501.** When the pressure-setting regulator **400** does not allow flow, the outlet pressure **550** can be ambient as no flow is passing through the pressure-setting regulator **400.** In this example, the zero pressure setting is the low point of the pressure range of the scale **500.** The configuration is shown, for example, in FIGS 10A-10D.

The scale **500** shown in FIG. 10A indicates set point values of outlet pressure **550** from 0 psig to **150** psig. By rotating the regulator knob **410** any value between 0 psig to 150 psig can be set at the outlet pressure **550** by the positive manual control of the operator turning the knob to select a given set point value **425** of outlet pressure **550** by aligning the arrowhead **422** proximate to the set point value **425** selected.

In an embodiment, the pressure-setting regulator **400** can be calibrated for exacting performance in achieving and maintaining a set outlet pressure **550.** A calibrated pressure gauge can be attached to a test manifold having an attached uncalibrated pressure-setting regulator. The uncalibrated pressure-setting regulator **400** can be set to a mid-range outlet pressure, such as 100 psig in a non-limiting example. In a calibration step, when the uncalibrated pressure-setting regulator **400** is set to a mid-range outlet pressure, an indicium, such as a label bearing a set point arrow **420,** can be placed on the knob driver top **428** (FIG. 10A) having the arrowhead **422** pointing to the mid-range outlet pressure, such as 100 psig, resulting in a calibrated pressure-setting regulator **400** calibrated to the mid-range outlet pressure.

In an embodiment, the mid-range outlet pressure can occur at a one-half of the rotational range of the regulator knob, and the scale can be configured to have the mid-range outlet pressure value positioned at the point of one-half of the rotation al range of the regulator knob. This allows the indicium to be configured on the regulator knob such that at the point in which the one-half of the rotational range of the regulator knob the indicium is aligned with, or is proximate to, the mid-range outlet pressure value of the scale, for example an arrowhead **422** pointing to the mid-range outlet pressure value of the scale.

FIG. 10B shows the knob bearing an indicium being rotated to a second position. FIG. 10B shows the regulator knob **410** being turned in the increasing flow direction **590** to select an outlet pressure set point **425** of 25 psig. When rotated to the second position, the valve configuration of pressure-setting regulator **400** is open to achieve an outlet gas stream **560** flow having the outlet pressure **550** of 25 psig. The configuration having a flow of the outlet gas stream **560** is shown, for example, in FIGS 11A-11C.

FIG. 10C shows the regulator knob **410** having a set point arrow **420** at a third position. FIG. 10C shows the knob positively controlling the outlet pressing **550** to the set point value **425** of 75 psig. FIG. 10C shows the pressure-setting regulator **400** maintaining the outlet pressure **550** at 75 psig. In the example of FIG. 10C, the 75 psig value is the mid-range set point of outlet pressure **550** of the pressure range of the scale **500.**

FIG. 10D shows the knob bearing an indicium, such as set point arrow **420,** being rotated to a fourth position in the increasing flow direction **590** to select an outlet pressure set point **425** of 150 psig, which is the maximum outlet pressure shown in the example of FIG. 10D. The valve configuration of pressure-setting regulator **400** opens to achieve an outlet gas stream **560** flow having the outlet pressure **550** of 150 psig. In this example, the 150 psig value is the high end set point of outlet pressure **550** of the pressure range of the scale **500.**

Optionally, the high-end set point of outlet pressure **550** of the scale **500** can be a maximum output pressure possible from the compressor. In another embodiment, the high-end set point of outlet pressure of the scale **500** can be limited to less than the maximum outlet pressure from the compressor. The limit on the outlet pressure **550** can be achieved by the design of the control knob threads or the knob thread grooves. Alternately, the compressor can be mechanically limited to the high-end set point of outlet pressure **550** of the scale **500.**

The rotation of the regulator knob **410** is reversible and the regulator knob **410** can be turned in either the increasing flow direction **590,** or the decreasing flow direction **595** (FIG. 11A), at an operator's discretion. Thus, an operator can change the outlet pressure **550** from a selected value to a different value by rotating the knob in either the increasing flow direction **590** or the decreasing flow direction **595.**

In an example the regulator knob **410** can be rotated from a set pressure, such as 150 psig, by rotating the regulator knob **410** in the decreasing flow direction **595** to the first position in which the pressure-setting regulator **400** is in an "no flow" position in which the set point value is zero, the outlet gas stream **560** is zero.

FIG. 11A shows a sectional view of the pressure-setting regulator **400** in a closed configuration. In the example of FIG. 11A, the pressure-setting regulator **400** is in a "no flow" position (FIG. 10A) in which the set point value is zero, the flow of the outlet gas stream **560** is zero, and the outlet pressure **550** not affected by the inlet pressure **501.** As shown in FIG. 11A, the regulator knob **410** is configured such that the valve poppet **437** is seated in poppet seat **438** and the valve configuration is closed and does not allow any portion of compressor gas stream to pass.

In an embodiment, the pressure-setting regulator **400** can be self-relieving and can respond to maintain a constant set outlet pressure when the set pressure is changed from a higher set outlet pressure to a lower set outlet pressure. In another example, the pressure-setting regulator **400** can be non-relieving. However, in the non-relieving embodiment the outlet pressure will reset from a higher outlet pressure to a lower outlet pressure after turning the regulator knob to set the lower outlet pressure and once the residual higher pressure gas is released from the valve channel **439** by use of a tool or other means. In either the relieving or non-relieving embodiments, the pressure-setting regulator valve configuration will respond to maintain a constant outlet pressure as compressed gas is used.

In the embodiment of FIG. 11A, rotating the regulator knob **410** in the increasing flow direction **590** can tighten the regulator knob **410** in a tightening direction **592.** In the reverse, as shown by dashed line type, rotating the regulator knob **410** in the decreasing flow direction **595** can loosen the regulator knob **410** in the loosening direction **598.**

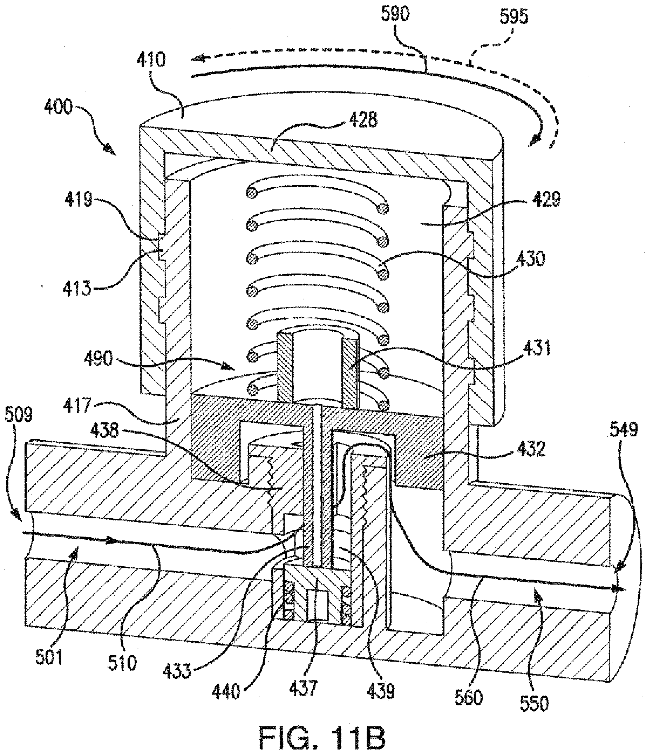

FIG. 11B shows a sectional view of the pressure-setting regulator **400** having the knob rotated to increase the pressure of an outlet gas stream. When the regulator knob **410** is rotated in an increasing flow direction **590** the poppet **437** is moved away from the poppet seat **438.** As a result, flow from compressed gas stream **510** is allowed to flow through the valve channel **439** to become an outlet gas stream **560.** The outlet gas stream **560** has a pressure which is positively controlled to achieve a set point value **425** of outlet pressure **550.** For example, the rotation of the regulator knob **410,** as shown for example in each of FIGS 10A-10D, can move the poppet **437** away from the poppet seat **438** and allow flow from compressed gas stream **510** to flow through the valve channel **439** to become an outlet gas stream **560** having a pressure which is positively controlled to achieve a set point value **425** of the outlet pressure **550.** In the example of FIG. 11B moving the poppet **437** away from the poppet seat **438** decreases the pressure drop across the valve **490,** increases the flow rate, and increases the outlet pressure **550.**

FIG. 11B shows that from a set position of the regulator knob **410** which maintains the flow at the set outlet pressure **550** can be manually rotated in the increasing flow direction **590,** or the decreasing flow direction **595,** shown as a dashed arrow, at an operator's discretion. The regulator knob **410** can be manually rotated in the increasing flow direction **590** to any outlet pressure **550** from a minimum value to a maximum value, or any outlet pressure **550** in between these set points. The regulator knob **410** can also be manually rotated in the decreasing flow direction **595** to any outlet pressure **550** from a maximum value to a minimum value or any outlet pressure **550** in between these set points.

When the regulator knob **410** is rotated in the decreasing flow direction **595,** the pressure of an outlet gas stream which is flowing is also reduced. When the regulator knob **410** is rotated in decreasing flow direction **595,** poppet **437** is moved toward poppet seat **438** and the flow rate from compressed gas stream **510** through the valve channel **439** is decreased, and the flow rate which becomes outlet gas stream **560** is also decreased. When the regulator knob **410** is rotated in decreasing flow direction **595,** for example in the counterclockwise direction, the poppet **437** is moved toward poppet seat **438** which increases the pressure drop across the valve **490,** decreases the flow rate and decreases the outlet pressure **550** during flow.

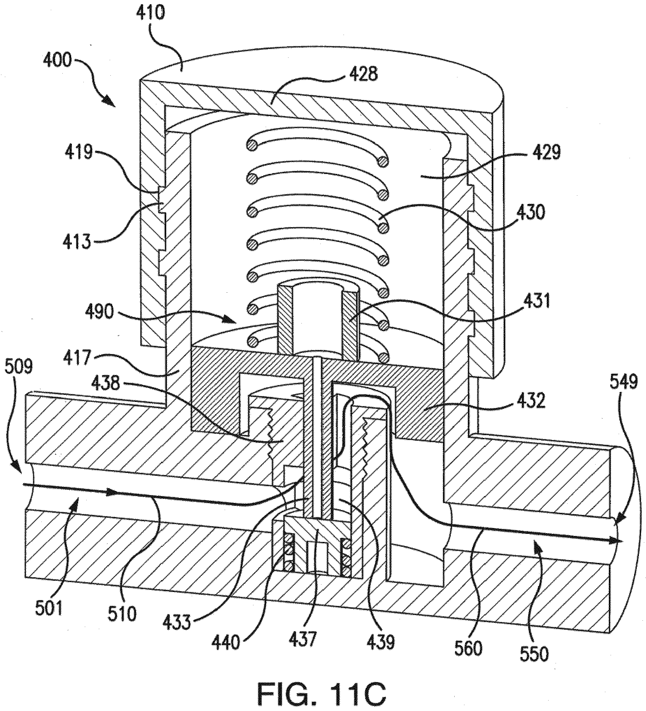

FIG. 11C shows a sectional view of the pressure-setting regulator having the knob rotated to a set outlet pressure **550** and regulating the flow of an outlet gas stream. FIG. 11C shows the pressure-setting regulator **400** maintaining the set point value **425** of outlet pressure **550,** such as shown for example in FIG. 10C.

From any set outlet pressure, the pressure-setting regulator **400** can be rotated in the decreasing flow direction **595** to a "no flow" position (as shown in FIG. 10A), and the flow of the outlet gas stream **560** can be reduced to zero. When the regulator knob **410** is rotated to a "no flow" position the valve poppet **437** to be seated in poppet seat **438** (FIG. 11A) and the valve configuration can be closed not allowing any portion of compressor gas stream to pass.

The scope of this disclosure is to be broadly construed. It is intended that this disclosure disclose equivalents, means, systems and methods to achieve the devices, designs, operations, control systems, controls, activities, mechanical actions, fluid dynamics and results disclosed herein. For each mechanical element or mechanism disclosed, it is intended that this disclosure also encompasses within the scope of its disclosure and teaches equivalents, means, systems and methods for practicing the many aspects, mechanisms and devices disclosed herein. Additionally, this disclosure regards a pressure regulator and its many aspects, features and elements. Such an apparatus can be dynamic in its use and operation. This disclosure is intended to encompass the equivalents, means, systems and methods of the use of the compressor assembly and its many aspects consistent with the description and spirit of the apparatus, means, methods, functions and operations disclosed herein. The claims of this application are likewise to be broadly construed.

The description of the inventions herein in their many embodiments is merely exemplary in nature and, thus, variations that do not depart from the gist of the invention are intended to be within the scope of the invention and the disclosure herein. Such variations are not to be regarded as a departure from the spirit and scope of the invention.

It will be appreciated that various modifications and changes can be made to the above described embodiments of the compressor assembly as disclosed herein without departing from the spirit and the scope of the following claims.

## Claims

1. A pressure regulator, comprising:
a scale indicating a plurality of outlet pressures which can be set as a selected outlet pressure of a gas exiting the pressure regulator;
a regulator knob adapted to be manually rotated to a selected outlet pressure from the plurality of outlet pressures; and
a regulator spring that at least in part controls a valve that regulates a flow of said gas,
wherein the regulator knob is adapted to change a spring compression of the regulator spring when the regulator knob is manually rotated to set the selected outlet pressure of the gas.

2. The pressure regulator of claim 1, wherein rotation of the regulator knob to the selected outlet pressure is free of a feedback control mechanism.

3. The pressure regulator of claim 1, wherein the selected outlet pressure is set by the regulator knob to a value selected on the scale, the pressure regulator being configured to produce an outlet pressure free of reference to an outlet pressure gauge.

4. The pressure regulator of claim 1, wherein the scale is configured to be generally coaxial with the circumference of the regulator knob.

5. The pressure regulator of claim 1, wherein the scale is configured to be generally coaxial with the circumference of the regulator knob and indicates a plurality of outlet pressures which can be selected and which have one or more of the plurality of outlet pressures in a range of from 25 psig to 250 psig.

6. The pressure regulator of claim 1, wherein the regulator knob has single-turn coarse grooves which slideably engage single-turn coarse threads which project from a portion of a regulator body.

7. The pressure regulator of claim 1, wherein the regulator knob further comprises an indicium which can be aligned with a portion of the scale to set the selected outlet pressure.

8. The pressure regulator of claim 1, wherein the regulator knob further comprises an arrow which can be pointed to a pressure indicated by the scale to set a selected outlet pressure.

9. The pressure regulator of claim 1, wherein the regulator knob can be ratcheted when rotated to cause an alignment of a portion of the regulator knob to a portion of the scale to set the selected outlet pressure.

10. A pressure control system, comprising:
a pressure regulator which has a regulator knob which can be rotated to control an outlet pressure of a gas exiting the pressure regulator;
a scale configured proximate to the regulator knob and indicating a plurality of outlet pressure values one of which can be selected as an outlet set pressure; and
an indicium mounted on and moved by the regulator knob, the indicium proximate to an outlet pressure value that is selected as an outlet set pressure,
wherein selection of the outlet set pressure by rotating the regulator knob controls the outlet pressure of the gas exiting the regulator at the outlet set pressure.

11. The pressure control system according to claim 10, further comprising a control cylinder having a single-turn course thread projecting therefrom, the single-turn course thread configured to slideably engage the regulator knob.

12. The pressure control system according to claim 10, wherein the regulator knob is a single-turn regulator knob.

13. The pressure control system according to claim 10, wherein the outlet pressure is controlled to within 15 percent of an outlet set pressure when the regulator knob remains in a fixed position corresponding to a selected outlet pressure.

14. The pressure control system according to claim 10, wherein the indicium which is configured to indicate an outlet pressure midpoint when the regulator knob is rotated to a point at about one-half of its rotational range.

15. A compressor for producing a compressed gas, comprising:
a pressure regulator;
a scale indicating a plurality of outlet pressures which can be set as a selected outlet pressure of a gas exiting the regulator;
a regulator knob adapted to be manually rotated to set the selected outlet pressure from the plurality of outlet pressures of the scale; and
a regulator spring that at least in part controls a valve that regulates a flow of said gas;
wherein the regulator knob is adapted to change a spring compression of the regulator spring when the regulator knob is manually rotated to set the selected outlet pressure of the gas, and
wherein the scale is configured proximate to a regulator knob.
